# FASCICULE DE BREVET EUROPEEN

(11) **EP 0 630 732 B1**
(45) Date de publication et mention de la délivrance du brevet: **08.04.1998**
(21) Numéro de dépôt: 94401334.1
(22) Date de dépôt: 14.06.1994
(51) Int. Cl.: B29C 45/17

(54) **Dispositif de bridage d'un demi-moule sur un plateau d'une presse de moulage, et presse de moulage munie d'un tel dispositif**
Spannvorrichtung für eine Formhälfte auf einer Pressplatte und mit solcher Vorrichtung ausgestattete Presse
Clamping apparatus for a mould half on a pressplate and moulding press provided with such an apparatus

(30) Priorité: 23.06.1993 FR 9307647
(43) Date de publication de la demande: 28.12.1994
(73) Titulaire: BILLION S.A., F-01810 Bellignat (FR)
(72) Inventeur: Guyon, Jean-François, F-01810 Groissiat (FR)
(74) Mandataire: Jacobson, Claude

(56) Documents cités:
- EP-A- 0 143 878
- EP-A- 0 286 553
- FR-A- 2 552 366

## Description

La présente invention est relative à un dispositif de bridage d'un demi-moule sur un plateau d'une presse de moulage, du type décrit dans le préambule de la revendication 1.

Un dispositif de bridage de ce type a été proposé par le EP-A-0 286 553, sans qu'une solution entièrement satisfaisante ait été trouvée. En effet, la rampe d'appui du coin est constituée par deux rainures latérales, ce qui rend difficile les changements de coins.

L'invention a pour but de fournir un dispositif particulièrement peu encombrant et économique à réaliser, qui soit facilement intégrable dans l'épaisseur du plateau, et qui permette un démontage facile et rapide du coin.

A cet effet, l'invention a pour objet un dispositif de bridage du type précité, caractérisé par la partie caractérisante de la revendication 1.

Ce dispositif peut comporter une ou plusieurs des caractéristiques décrites dans les revendications 2 à 8.

L'invention a également pour objet une presse de moulage, notamment pour le moulage par injection d'une matière plastique, dont au moins un plateau comporte au moins un dispositif de bridage tel que défini ci-dessus.

Des exemples de réalisation de l'invention vont maintenant être décrits en regard des dessins annexés, sur lesquels :
- la Figure 1 représente en élévation un dispositif de bridage suivant l'invention, en position de repos;
- la Figure 2 est une vue prise en coupe suivant la ligne II-II de la Figure 1;
- la Figure 3 est une vue analogue à la Figure 2 mais représentant le dispositif de bridage en position active;
- la Figure 4 est une vue en perspective du dispositif de bridage en position active;
- la Figure 5 est une vue analogue à la Figure 4, mais avec une coupe longitudinale partielle;
- la Figure 6 est une vue analogue à la Figure 2 d'une variante; et
- la Figure 7 est une vue de détail prise suivant la flèche VII de la Figure 6.

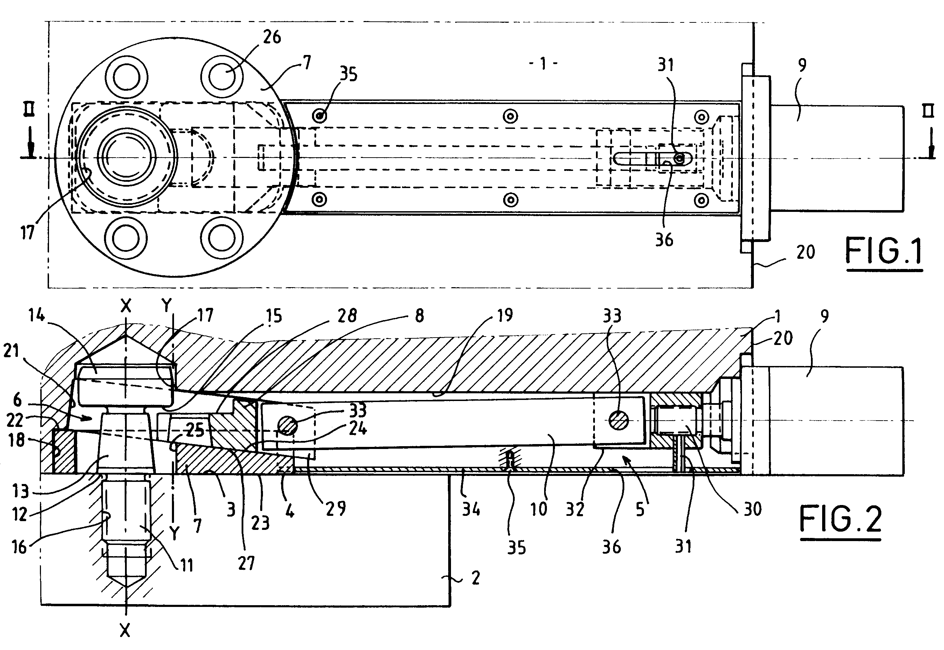

On a représenté aux Figures 1 et 2 une zone marginale d'un plateau vertical 1 d'une presse de moulage de matière plastique par injection, ainsi qu'une zone marginale d'un demi-moule 2 (non représenté sur la Figure 1) fixé de manière amovible sur ce plateau. Plus précisément, une face arrière 3 du demi-moule est serrée contre une face avant 4 du plateau au moyen d'un dispositif de bridage 5 constitué essentiellement d'un pion 6, d'un bloc d'appui 7, d'un coin 8, d'un vérin à double effet 9 et d'une bielle de transmission 10.

En pratique, il est prévu plusieurs dispositifs identiques 5, répartis sur la périphérie du demi-moule, autour d'une région centrale (non visible sur les dessins) de ce demi-moule et du plateau comportant un passage d'injection de la matière à mouler.

Le pion 6 est de révolution autour d'un axe X-X horizontal. Il comporte un pied fileté 11 délimité par un épaulement radial 12, une partie intermédiaire 13 et une tête élargie 14 qui présente une face arrière plane et verticale 15. Le pied 11 est vissé à fond dans un trou taraudé 16 ménagé dans la face 3 du demi-moule, jusqu'à butée de l'épaulement 12 contre cette face.

Un alésage borgne 17 d'axe X-X, de diamètre légèrement plus grand que le plus grand diamètre du pion 6, est creusé dans la face 4 du plateau, et un contre-alésage ou lamage 18 de diamètre nettement plus grand, d'axe Y-Y parallèle à l'axe X-X mais décalé vers la face verticale adjacente 20 du plateau par rapport à cet axe, est usiné à l'entrée de l'alésage 17. De plus, un évidement 19 de forme allongée, dirigé horizontalement, débouche d'un côté dans l'alésage 17 et de l'autre sur la face latérale 20, l'évidement 19 débouchant par ailleurs sur toute sa longueur sur la face 4. En outre, un évidement 21 à section rectangulaire, plus large que l'alésage 17, part en oblique de l'évidement 19 et coupe de part en part cet alésage.

Le bloc d'appui 7 a la forme d'une galette à section circulaire conjuguée de celle du contre-alésage 18. Cette galette est définie par deux faces planes et parallèles, intérieure 22 et extérieure 23, et par un pan coupé 24 dont la largeur est de l'ordre de la moitié du diamètre du bloc 7 et qui part de la face 22 et s'étend à peu près jusqu'à mi-hauteur de la galette. Lorsque la face 22 est en butée contre le fond du contre-alésage 18, la face 23 se trouve dans le même plan que la face 4, ou légèrement en retrait par rapport à celle-ci. Le bloc 7 est en outre percé d'un trou circulaire 25 d'axe X-X, et par conséquent excentré, qui débouche vers l'extérieur sur la face 23 et vers l'intérieur sur le pan coupé 24. Le bloc 7 peut se fixer dans le contre-alésage 18 au moyen de quatre vis 26 (Figure 1), dont les têtes sont en retrait par rapport à la face 23.

Le coin 8 a la forme d'une fourche et est guidé, dans l'évidement 21, par les parois délimitant de part et d'autre le pan coupé 24. Les branches de la fourche présentent une face extérieure oblique 27 de même pente que la face 24 du bloc 7, et une face intérieure opposée verticale 28 parallèle à la face 23. Du côté du vérin 9, le coin forme une chape 29.

Le corps du vérin 9 est fixé sur la face latérale 20 du plateau. Sa tige de piston 30 porte une chape 32, laquelle porte un index 31 en saillie vers l'extérieur du plateau.

La bielle 10 est articulée au moyen de deux axes verticaux 33 d'un côté dans la chape 29 du coin, et de l'autre dans celle 32 du vérin. Cette bielle est entièrement contenue dans l'évidement 19, lequel est fermé par une plaquette amovible 34 maintenue par des vis 35. Cette plaquette comporte une fente médiane 36 dirigée horizontalement, qui laisse apparaître l'index 31.

Lorsqu'on monte le demi-moule 2, les vérins 9 sont rétractés, ce qui amène les coins 8 près de l'extrémité basse des rampes 24, les coins dégageant alors entièrement l'enveloppe géométrique des alésages 17. Cette position peut être contrôlée au moyen des index 31, lesquels se trouvent près de l'extrémité extérieure des fentes 36.

Le demi-moule étant centré par rapport au plateau, chaque pion 6 se trouve centré sur son alésage 17. On approche le demi-moule du plateau, de sorte que chaque pion traverse un trou 25 et pénètre librement presque jusqu'au fond de l'alésage 17 lorsque la face 3 du demi-moule vient au contact de la face 4 du plateau. La situation est alors celle illustrée aux Figures 1 et 2.

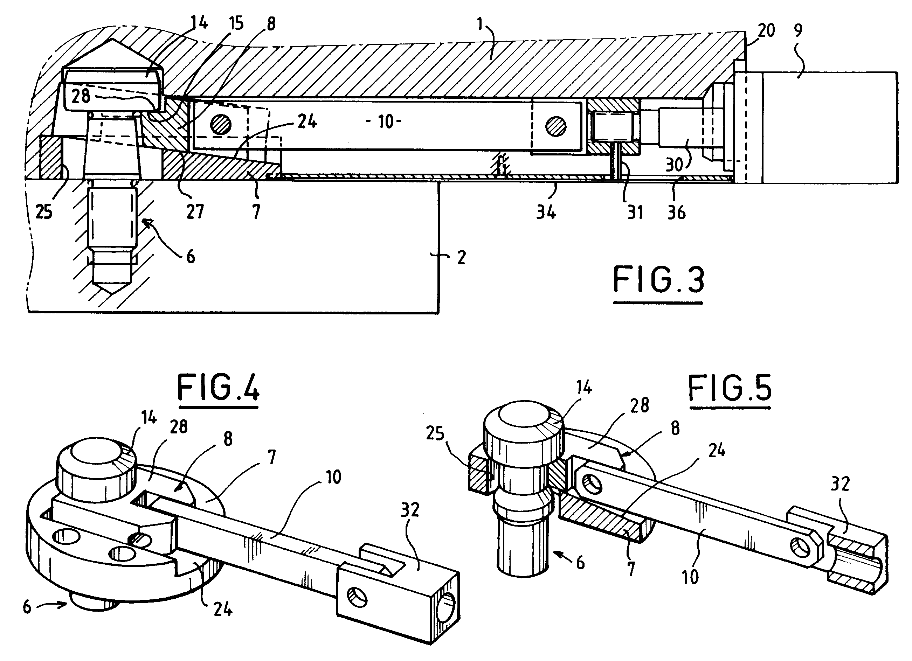

On met alors en extension des vérins 9, ce qui pousse les coins 8 vers les têtes 14 des pions 6 en montant le long des rampes 24. Dans la position finale de bridage des Figures 3 à 5, la face verticale 28 de chaque coin s'appuie sur la face verticale 15 de la tête de pion 14 associé. Les index 31 se trouvent alors près de l'extrémité intérieure des fentes 36.

Le débridage du demi-moule s'effectue simplement par retrait des vérins 9. Pour cela, on peut, de manière classique, utiliser un amplificateur de pression, l'effort de desserrage à développer étant généralement supérieur à l'effort de serrage.

Le dispositif de bridage 5 présente de nombreux avantages. En particulier :
- le dispositif peut être facilement intégré dans l'épaisseur du plateau, au prix de quelques usinages simples;
- les seules surfaces qui s'usent sont la surface 24 et les surfaces latérales adjacentes du bloc 7, les surfaces 27 et 28 et les surfaces latérales adjacentes du coin, la surface 15 du pion et les axes 33, et toutes ces surfaces se trouvent sur des pièces amovibles et interchangeables, de sorte qu'aucun rééusinage du plateau n'est nécessaire pendant la durée de vie du dispositif;
- grâce à la forme en fourche des coins et au décalage vers l'extérieur de l'axe Y-Y par rapport à l'axe X-X, l'usinage du plateau reste limité à une zone très marginale de celui-ci, ce qui laisse beaucoup d'espace disponible dans la région centrale du plateau pour l'implantation du système d'injection de la matière plastique.

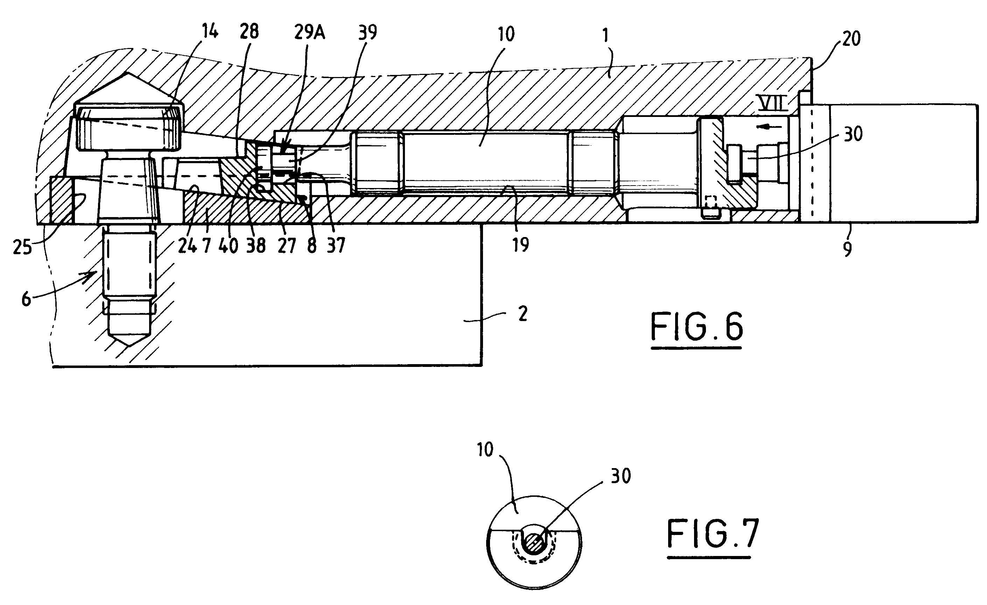

Le mode de réalisation des Figures 6 et 7 ne diffère de celui décrit ci-dessus que par le mode de transmission des efforts du vérin 9 au coin 8. En effet, la bielle 10 est à section circulaire, et l'évidement 19, au lieu de déboucher sur la face 4 du plateau, est un alésage de guidage de cette bielle, percé horizontalement à partir de la face latérale 20 du plateau.

La chape 29 du coin est remplacée par une fente horizontale 29A, ouverte vers l'intérieur du plateau, qui comporte une partie extérieure étroite 37 et une partie intérieure large 38. L'extrémité correspondante de la bielle 10 présente un col 39 et une tête élargie 40, adaptés pour être reçus à coulissement, respectivement, dans les parties 37 et 38 de la fente 29A.

Ainsi, lors des déplacements en va-et-vient de la bielle, le coin peut monter et descendre le long de la rampe 24 du bloc 7.

L'accouplement entre la bielle 10 et la tige de vérin 30 est analogue à celui, décrit ci-dessus, entre la même bielle et le coin 8.

## Revendications

1. Dispositif de bridage d'un demi-moule (2) sur un plateau (1) d'une presse de moulage, du type comprenant un pion de révolution (6) qui fait saillie sur le demi-moule et qui est reçu dans un évidement (17) du plateau, ce pion comportant une tête élargie (14), et un mécanisme de serrage (5) comportant un vérin transversal (9), un coin (8) adapté pour coopérer avec la face intérieure (15) de la tête (14) du pion pour assurer le bridage amovible du demi-moule, et un bloc d'appui (7) adapté pour être fixé à l'entrée de l'évidement (17) et comportant d'une part un passage (25) pour le pion (6), et d'autre part une rampe (24) d'appui du coin (8), caractérisé en ce que la rampe (24) est prévue sur la face du bloc tournée vers l'évidement (17) du plateau (1).

2. Dispositif suivant la revendication 1, caractérisé en ce que le passage (25) du bloc d'appui (7) est excentre par rapport au bloc du côté de celui-ci qui est le plus proche de l'axe central du plateau (1).

3. Dispositif suivant la revendication 1 ou 2, caractérisé en ce que le coin (8) a la forme d'une fourche ouverte vers l'axe central du plateau (1).

4. Dispositif suivant l'une quelconque des revendications 1 à 3, caractérisé en ce que le mécanisme de serrage (5) comporte une bielle (10) articulée d'un côté sur la tige de piston (30) du vérin (9) et de l'autre côté sur le coin (8).

5. Dispositif suivant l'une quelconque des revendications 1 à 3, caractérisé en ce que le mécanisme de serrage (5) comporte une bielle (10) guidée en translation et dont l'extrémité opposée au vérin (9) est montée coulissante dans une fente (29A) du coin (8) perpendiculaire à l'axe de la bielle.

6. Dispositif suivant l'une quelconque des revendications 1 à 5, caractérisé en ce que le bloc d'appui (7) a une section circulaire et s'emboîte dans un lamage conjugué (18) du plateau (1).

7. Dispositif suivant l'une quelconque des revendications 1 à 6, caractérisé en ce que le mécanisme de serrage (5) est entièrement contenu dans l'épaisseur du plateau (1).

8. Dispositif suivant l'une quelconque des revendications 1 à 7, caractérisé en ce que la tige de piston (30) du vérin, ou un organe qui lui est lié en translation, comporte un index (31) situé en dehors du contour du demi-moule (2) et visible en regardant le plateau (1).

9. Presse de moulage, notamment pour le moulage par injection d'une matière plastique, dont au moins un plateau (1) comporte au moins un dispositif de bridage (5) suivant l'une quelconque des revendications 1 à 8.

## Claims

1. Device for clamping a mould half (2) onto a plate (1) of a moulding press, of the type comprising a pin (6) in the form of a solid of revolution which projects from the mould half and which is received in a recess (17) in the plate, the pin comprising a widened head (14), and a locking mechanism (5) comprising a transverse jack (9), a wedge (8) adapted to co-operate with the inner face (15) of the head (14) of the pin to ensure the releasable clamping of the mould half, and a support block (7) adapted to be secured to the mouth of the recess (17) and comprising, on the one hand, a passage (25) for the pin (6) and, on the other hand, a support ramp (24) for the wedge (8), characterised in that the ramp (24) is provided on the face of the block facing the recess (17) of the plate (1).

2. Device according to Claim 1, characterised in that the passage (25) of the support block (7) is off-centre relative to the block on the side of the latter which is nearest to the central axis of the plate (1).

3. Device according to Claim 1 or 2, characterised in that the wedge (8) is in the form of a fork which is open towards the central axis of the plate (1).

4. Device according to any one of Claims 1 to 3, characterised in that the locking mechanism (5) comprises a connecting rod (10) articulated on one side to the piston rod (30) of the jack (9) and on the other side to the wedge (8).

5. Device according to any one of Claims 1 to 3, characterised in that the locking mechanism (5) comprises a connecting rod (10) which is guided in translation and of which the end remote from the jack (9) is slidably mounted in a slot (29A) of the wedge (8) perpendicular to the axis of the connecting rod.

6. Device according to any one of Claims 1 to 5, characterised in that the support block (7) has a circular cross-section and fits in a mating countersunk portion (18) of the plate (1).

7. Device according to any one of Claims 1 to 6, characterised in that the locking mechanism (5) is contained entirely within the thickness of the plate (1).

8. Device according to any one of Claims 1 to 7, characterised in that the piston rod (30) of the jack, or a member that is linked thereto in translation, comprises an indicator (31) which is arranged outside the contour of the mould half (2) and which is visible when observing the plate (1).

9. Moulding press, especially for the injection moulding of a plastics material, of which at least one plate (1) comprises at least one clamping device (5) according to any one of Claims 1 to 8.

## Patentansprüche

1. Vorrichtung zum Spannen einer Formhälfte (2) auf eine Platte (1) einer Formpresse, mit einem drehbaren Pion (6), der auf die Formhälfte vorsteht und in einer Vertiefung (17) der Platte aufgenommen ist, wobei der Pion einen vergrößerten Kopf (14) und einen Spannmechanismus (5) aufweist, der einen querverlaufenden Hydraulikzylinder (9) umfaßt, einen Keil (8), der zum Zusammenwirken mit der Innenfläche (15) des Kopfs (14) des Pions ausgelegt ist, um die lösbare Verspannung der Formhälfte zu gewährleisten, und einen Auflageblock (7), der dazu ausgelegt ist, am Eintritt der Vertiefung (17) fixiert zu werden, und der einerseits einen Durchlaß (25) für den Pion (6) und andererseits eine Auflagerampe (24) für den Keil (8) aufweist, dadurch gekennzeichnet, daß die Rampe (24) auf der zur Vertiefung (17) der Platte (1) weisenden Seite des Blocks vorgesehen ist.

2. Vorrichtung nach Anspruch 1, dadurch gekennzeichnet, daß der Durchlaß (25) des Auflageblocks (7) relativ zu dem Block auf derjenigen Seite des Blocks exzentrisch verläuft, die am nächsten zur Mittenachse der Platte (1) liegt.

3. Vorrichtung nach Anspruch 1 oder 2, dadurch gekennzeichnet, daß der Keil (8) die Form einer zur Mittenachse der Platte (1) offenen Gabel aufweigt.

4. Vorrichtung nach einem der Ansprüche 1 bis 3, dadurch gekennzeichnet, daß der Spannmechanismus (5) eine Stange (10) aufweist, die einerseits an die Stange des Kolbens (30) des Hydraulikzylinders (9) und andererseits an den Keil (8) angelenkt ist.

5. Vorrichtung nach einem der Ansprüche 1 bis 3, dadurch gekennzeichnet, daß der Spannmechanismus (5) eine translationsmäßig geführte Stange aufweist, deren zum Hydraulikzylinder (9) weisendes Ende in einem Schlitz (29A) des Keils (8) senkrecht zur Achse der Stange gleitend angebracht ist.

6. Vorrichtung nach einem der Ansprüche 1 bis 5, dadurch gekennzeichnet, daß der Auflageblock (7) einen kreisförmigen Querschnitt aufweist und in eine konjugierte bzw. entsprechende Senkung (18) der Platte (1) eingreift.

7. Vorrichtung nach einem der Ansprüche 1 bis 6, dadurch gekennzeichnet, daß der Spannmechanismus (5) vollständig in der Dicke der Platte (1) enthalten ist.

8. Vorrichtung nach einem der Ansprüche 1 bis 7, dadurch gekennzeichnet, daß die Kolbenstange (30) des Hydraulikzylinders oder ein Organ, welches mit ihm translationsmäßig verbunden ist, einen Zeiger (31) aufweist, der außerhalb der Kontur der Formhälfte (2) sowie sichtbar bei Betrachtung der Platte (1) angeordnet ist.

9. Formpresse, insbesondere zum Spritzgießen von Kunststoffmaterial, von der zumindest eine Platte (1) zumindest eine Spannvorrichtung (5) nach einem der vorangehenden Ansprüche 1 bis 8 umfaßt.
